# EUROPÄISCHE PATENTSCHRIFT

(11) **EP 1 185 810 B1**
(45) Veröffentlichungstag und Bekanntmachung des Hinweises auf die Patenterteilung: **10.09.2003**
(21) Anmeldenummer: 00940377.5
(22) Anmeldetag: 15.06.2000
(51) Int. Cl.: F16K 1/30

(54) **AUSLASSVENTIL FÜR CO2-DRUCKFLASCHEN**
DISCHARGE VALVE FOR CO2-PRESSURE CYLINDERS
SOUPAPE D'ECHAPPEMENT POUR BOUTEILLES A PRESSION DESTINEES A LA GAZEIFICATION A L'AIDE DE CO2

(30) Priorität: 17.06.1999 DE 19927667
(43) Veröffentlichungstag der Anmeldung: 13.03.2002
(73) Patentinhaber: Soda-Club (CO 2) SA, 6300 Zug (CH)
(72) Erfinder: KIEFER, Rainer, 65195 Wiesbaden (DE)
(74) Vertreter: Weber, Dieter, Dr.
(86) Internationale Anmeldenummer: EP0005522
(87) Internationale Veröffentlichungsnummer: WO00079159

(56) Entgegenhaltungen:
- DE-A- 2 406 313
- US-A- 4 611 628
- US-A- 5 305 794
- US-A- 5 413 230
- US-A- 5 465 754

## Beschreibung

Die vorliegende Erfindung betrifft ein Auslaßventil für CO₂-Druckflaschen, mit einem Strömungsdurchgang für CO₂-Gas, einem von außen betätigbaren Ventilelement, welches verschiedene Positionen einnehmen kann und welches in mindestens einer dieser Positionen den Strömungsdurchgang verschließt und in mindestens einer anderen dieser Positionen den Strömungsdurchgang frei gibt, und mit Verbindungsmitteln für das feste und dichte Verbinden des Auslaßventils mit einer CO₂-Druckflasche, wobei in dem Strömungsdurchgang ein von der durch das Ventilelement freigebbaren Ventilöffnung unabhängiger Strömungswiderstand vorgesehen ist.

Entsprechende Auslaßventile sind beispielsweise bekannt aus den US-Patenten 4,611,628 und 5,305,794. Bei der US 4,611,628 dient der zusätzliche Strömungswiderstand nur als Schalthilfe für das Ventil, wobei eine hinter dem Strömungswiderstand liegende Zwischendruckkammer beim Öffnen des Ventils zunächst entleert wird, so daß der Ventilkörper, dessen eines Ende in der Zwischendruckkammer liegt, von seinem anderen Ende her mit dem Druck des Druckbehälters beaufschlagt wird und dadurch vollständig öffnet. Im Falle der US 5,305,794 ist ein in einen Druckbehälter ragender Ventilstutzen vorgesehen, der zwei gegenüberliegende Bohrungen aufweist, die permanent die Verbindung eines inneren Ventilkanals 70 mit dem Inneren des Druckgefäßes herstellen. Diese Öffnungen sind so bemessen, daß auch bei einem Abbrechen des äußeren Ventilstückes keine übermäßig großen Mengen des in dem Behälter enthaltenen Gases austreten. Gleichzeitig ist an dem in den Behälter ragenden Ventilstutzen noch ein Rückschlagventil vorgesehen, welches einen größeren Öffnungsquerschnitt freigibt, wenn das Ventil von außen her mit Druck beaufschlagt wird, beispielsweise um den Behälter zu füllen.

Die vorgenannten Druckschriften befassen sich allerdings nicht mit dem Problem, daß das Ventil anstatt mit Gas womöglich auch mit Flüssigkeit beaufschlagt werden könnte, wobei die austretende Flüssigkeit außerhalb der Flasche bzw. noch im Ventil zu einer sehr starken Expansion neigen und womöglich auch eine Explosion äußerer Teile hervorrufen könnte, die nicht so druckfest sind, wie der Druckbehälter.

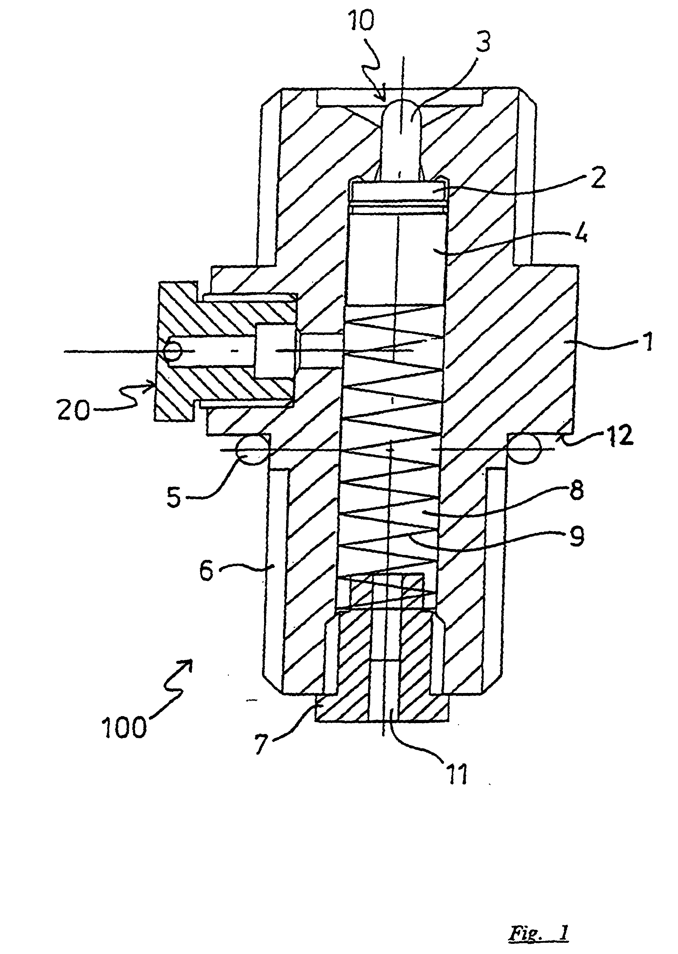

Ein anderes bekanntes Auslaßventil ist beispielhaft in Figur 1 der anhängenden Zeichnungen dargestellt. Dabei ist das Auslaßventil ein federnd vorgespanntes Tellerventil mit einem an einem Ende des Ventils aus einer Vertiefung hervorragenden Betätigungsnippel. Durch Eindrücken des Nippels wird der Ventilteller aus seinem Sitz gedrückt und gibt damit einen Strömungsdurchgang für CO₂-Gas frei. Im allgemeinen ist das eine Ende eines solchen Auslaßventils fest mit einer CO₂-Druckflasche verschraubt, wobei über das Gewinde ein flanschartig überstehender Bund mit einem O-Ring an den die Gewindeöffnung einer CO₂-Druckflasche umgebenden, ebenen Rand angedrückt wird und somit das Ventil fest und dicht mit der CO₂-Druckflasche verbindet. Auch das andere Ende wird im allgemeinen mit einer Betätigungseinrichtung verschraubt, die auch einen Druckminderer aufweist, wobei Teile an dem Druckminderer dafür ausgelegt sind, den Betätigungsnippel des Auslaßventils zu betätigen, sobald der Druckminderer entsprechend eingestellt ist und CO₂-Gas aus der Druckflasche entnommen werden soll.

Zusätzlich weisen derartige Auslaßventile im Regelfall noch ein Überdrucksicherheitsventil auf, welches vor dem von außen betätigbaren Ventilelement mit dem Strömungsdurchgang des Auslaßventils verbunden ist und welches zum Beispiel eine Berstscheibe aufweist, die bei Erreichen eines Druckgrenzwertes bricht, um ein Explodieren der Druckgasflasche zu vermeiden

CO₂-Druckflaschen mit entsprechenden Auslaßventilen werden inzwischen relativ häufig verwendet für die Herstellung von sogenanntem Sodawasser, d.h. von mit Kohlensäure bzw. CO₂ versetztem Trinkwasser. Zunehmend mehr Haushalte sind dazu übergegangen, sich entsprechendes, mit CO₂-versetztes Trinkwasser, in der Umgangssprache auch als Sprudelwasser oder "Sprudel" bezeichnet, selbst herzustellen, da dies erheblich preiswerter kommt als der Kauf von in Flaschen abgefülltem Sprudelwasser, wie es allgemein im Handel angeboten wird.

Für das Versetzen von Trinkwasser mit CO₂ sind für die Verwendung im Haushalt spezielle Vorrichtungen vorgesehen, in denen einerseits die CO₂-Druckflasche gehaltert wird und in denen andererseits auch eine hinreichend druckfeste Trinkwasserflasche aufgenommen werden kann, die über den bereits erwähnten Druckminderer und entsprechende Zuleitungen mit der CO₂-Druckgasflasche abgedichtet verbunden werden kann. Sobald eine entsprechende Trinkwasserflasche in die Vorrichtung eingespannt bzw. eingesetzt worden ist, wird ein Ventil betätigt, welches über den Druckminderer und das Ventilelement des Auslaßventils die Verbindung zu der CO₂-Druckgasflasche herstellt, so daß CO₂-Gas unter einem Druck, der typischerweise im Bereich von 2 bis 10 bar liegt, in die mit Trinkwasser gefüllte Flasche einströmt und dabei im Trinkwasser gelöst wird. Nachdem das Trinkwasser für einige Sekunden unter einem entsprechenden Druck mit CO₂-Gas beaufschlagt worden ist, wird das Ventil wieder geschlossen und die Trinkwasserflasche kann herausgenommen werden und damit steht das mit CO₂-begaste Trinkwasser für den Verbrauch bereit. Im allgemeinen weist die Trinkwasserflasche auch einen Verschluß auf, um ein schnelles und vorzeitiges Entgasen des Wassers zu vermeiden.

Derartige sogenannte "Sodageräte" sind bereits millionenfach in Gebrauch und haben sich im Prinzip bewährt. Es hat sich jedoch im Gebrauch herausgestellt, daß der Begasungsgrad des Trinkwassers mit CO₂ trotz gleicher Betätigungsdauer des Begasungsventils nicht immer auf dem gleichen Niveau gehalten werden kann. Insbesondere kann auch ein geneigter Stand eines entsprechenden Sodagerätes oder eine mehr oder weniger geneigte Montage an der Wand dazu führen, daß sich nicht immer dieselbe CO₂-Menge in dem Trinkwasser löst wie im Falle des aufrechten Standes eines entsprechenden Sodagerätes.

Zudem wäre es häufig wünschenswert, das Sodagerät in einer geneigten oder liegenden Position aufzubewahren oder zu montieren, wobei lediglich die Trinkwasserflasche beim Abnehmen und Ansetzen eine im wesentlichen vertikale Lage einnehmen müßte. Verschwenkbare Verbindungsköpfe für entsprechende Trinkwasserflaschen sind bereits bekannt. Aus Platzgründen möchte man mitunter insbesondere auch die CO₂-Druckgasflasche in einer anderen als der üblichen aufrechten Montierung in bzw. an dem Sodagerät unterbringen. In einer liegenden Position würde jedoch bei einer gefüllten CO₂-Druckgasflasche das CO₂ zunächst in flüssiger Form in den Druckminderer eintreten, wobei es zwar verdampft und dabei abkühlt, wobei jedoch dann im Regelfall mehr CO₂ in dem Trinkwasser gelöst wird als dann, wenn das CO₂ nur gasförmig in den Druckminderer eintritt, so daß es zu einem stärkeren Begasungsgrad kommen kann, als dies der Benutzer wünscht. Zwar lassen sich die Befüllventile im Regelfall so einstellen, daß sie gegebenenfalls überschüssiges CO₂ nach außen entlüften und auch der gewünschte Begasungsdruck ist im Regelfall einstellbar, allerdings ist das Ablassen von überschüssigem CO₂ im allgemeinen unerwünscht.

Außerdem würden sich im Falle einer liegenden CO₂-Druckgasflasche im Verlaufe der allmählichen Entleerung dieser Druckgasflasche unterschiedliche Bedingungen einstellen, da zunächst nur flüssiges CO₂ aus der Flasche und in den Druckminderer eintritt, nach einer gewissen Zeit eine Mischung an flüssigem und gasförmigem CO₂ austreten würde und schließlich nur noch gasförmiges CO₂ austreten könnte, wenn der Flüssigkeitsspiegel hinreichend abgesenkt ist. Bei den sich wechselnden Bedingungen müßte daher der Benutzer die Ventile stets neu einstellen, um den jeweils gewünschten Begasungsdruck und Begasungsgrad aufrecht zu erhalten und um dabei möglichst wenig überschüssiges CO₂ entweichen zu lassen.

Gegenüber diesem Stand der Technik liegt der vorliegenden Erfindung die Aufgabe zugrunde, ein Auslaßventil für CO₂-Druckgasflaschen zu schaffen, welches nach Möglichkeit in beliebigen Einbaulagen einer CO₂-Druckgasflasche immer konstante Befüllbedingungen gewährleistet, so daß einmal vom Benutzer vorgenommene, gewünschte Ventileinstellungen nicht mehr geändert zu werden brauchen.

Diese Aufgabe wird dadurch gelöst, daß der Strömungswiderstand derart ausgebildet ist, daß er bei einer Temperatur von 20°C und einer CO₂-Gas-Strömungsrate von 0,5 g/s einen Druckabfall von mindestens 1 bar, vorzugsweise von mehr als 3 bar hervorruft.

Es versteht sich, daß sich die hier angegebene Strömungsrate und der Druckabfall auf CO₂ im gasförmigen Zustand beziehen.

Selbstverständlich stellt auch ein Ventil mit einer mehr oder weniger kleinen oder großen Ventildurchgangsöffnung einen gewissen Strömungswiderstand bereit, enfindungsgemäß soll jedoch ein unabhängiger Strömungswiderstand vorgesehen sein, der einen größeren Druckabfall garantiert als dies mit dem üblichen Ventilelement eines Auslaßventils möglich ist und dadurch den Hindurchtritt von flüssigem CO₂ jedenfalls in größeren Mengen verhindert. Ansonsten unterliegt die Art der Ausbildung des Strömungswiderstandes keinen Einschränkungen. Es kann sich um ein zusätzliches Ventil oder Druckminderer, um einen Stopfen mit feinen Bohrungen oder oder um eine sonstiges Einbauteil handeln, daß lediglich dem Zweck dient, durch Behinderung eines Stromes von flüssigem CO₂ dessen Übergang in den gasförmigen Zustand zu erzwingen, bevor das CO₂ das Ausgangsventil verläßt.

Noch bevorzugter ist eine Ausführungsform, bei welcher ein solcher Strömungswiderstand unter den angegebenen Bedingungen mehr als 5 bar, vorzugsweise mehr als 10 bar hervorruft. Andererseits sollte aber der Strömungswiderstand auch so ausgestaltet sein, daß er bei der CO₂-Strömungsrate von 0,5 g/s und einer Temperatur von 20°C keinen Druckabfall hervorruft, der größer als 50 bar ist, und besser ist es, wenn der Druckabfall weniger als 40 bar und besonders bevorzugt weniger als 30 bar beträgt. Ein allzu hoher Druckabfall bei der angegebenen Strömungsrate würde ansonsten dazu führen, daß das normale Befüllen der Trinkwasserflasche mit CO₂-Gas zur Erzeugung eines entsprechenden Sprudelwassers relativ lange Zeit in Anspruch nehmen würde.

Am meisten bevorzugt ist eine Ausführungsform der Erfindung, bei welcher der Strömungswiderstand unter den angegebenen Bedingungen einen Druckabfall zwischen etwa 12 und 15 bar hervorruft.

Aufgrund des hohen Strömungswiderstandes und durch den bei einer entsprechenden Strömungsrate damit verbundenen Druckabfall geht flüssiges CO₂ beim Durchströmen des Strömungswiderstands in den gasförmigen Zustand über, so daß ein Hindurchtreten des CO₂ durch den Strömungswiderstand in flüssiger Form praktisch ausgeschlossen ist.

Mit anderen Worten, selbst wenn die CO₂-Druckgasflasche auf den Kopf gestellt und dabei das Auslaßventil betätigt wird, so sorgt der Strömungswiderstand dafür, daß das CO₂ nur in gasförmiger Form durch den Strömungswiderstand hindurch- bzw. aus diesem austreten kann, so daß hierdurch vermieden wird, daß CO₂ in flüssiger Form in den Druckminderer hinein und durch diesen hindurchtreten kann.

Damit ist auch unter sehr unterschiedlichen äußeren Betriebsbedingungegn und bei beliebiger Einbaulage der CO₂-Druckflasche die gewünschte Konstanz der im Trinkwasser gelösten CO₂-Menge gewährleistet.

Zweckmäßigerweise ist zusätzlich zu dem Strömungsventil ein Rückschlagventil vorgesehen, welches in Einlaßrichtung einen den Strömungswiderstand umgehenden Bypass freigibt, jedoch in Auslaßrichtung schließt. Da die entsprechenden Druckgasflaschen im allgemeinen über das Auslaßventil auch befüllt werden, und zwar unter einem relativ hohen Druck von ca. 90 bar mit CO₂ in flüssiger Form, wäre der erwähnte Strömungswiderstand in dem Auslaßventil sehr hinderlich und würde die Befüllzeiten der CO₂-Druckgasflaschen um ein Vielfaches verlängern. Dadurch, daß ein in dieser Befüllrichtung öffnendes Rückschlagventil vorgesehen ist, welches eine Umgehung des Strömungswiderstandes ermöglicht, wird der Füllvorgang nicht behindert.

Zweckmäßigerweise ist das betreffende Rückschlagventil in Schließrichtung federnd vorgespannt.

Der Strömungskörper kann zum Beispiel ein Sinterkörper sein, man kann jedoch ebenso gut auch eine druckfeste Membran verwenden.

In der bevorzugten Ausführungsform ist der Strömungswiderstand aus Kunststoff oder keramischem Material hergestellt, zum Beispiel in Form eines porösen Sinterkörpers. Ebenso könnte der Strömungswiderstand jedoch auch aus einem metallischen Sinterkörper hergestellt sein.

Die bevorzugte durchschnittliche Porengröße eines solchen Sinterkörpers oder sonstigen porösen Materials sollte vorzugsweise in der Größenordnung von 1 bis 10 l liegen, wobei die Porosität zwischen 10% und 80% betragen kann.

In einer Ausführungsform des erfindungsgemäßen Auslaßventils kann der Strömungswiderstand in Form eines porösen Sinterkörpers als in einem Ventilsitz beweglich aufgenommener Ventilkörper ausgebildet sein. Dieses von dem Sinterkörper oder sonstigen porösen bzw. teildurchlässigen Element gebildete 'Ventil" wäre zwar im geschlossenen Zustand nicht dicht, sondern würde im geschlossenen Zustand immer noch die Mengen hindurchlassen, die durch den Strömungskörper, der hier als Ventilkörper ausgebildet ist, hindurchtreten können, gleichzeitig kann dieser Ventilkörper jedoch aus seinem Sitz herausbewegt werden und würde damit (in Einlaßrichtung) einen erheblich größeren Strömungsquerschnitt freigeben, dessen Strömungswiderstand vernachlässigbar wäre. In diesem Fall würde also der Strömungswiderstand selbst einen Teil eines Rückschlagventiles bilden. Dabei sollte selbstverständlich der als Ventilkörper ausgebildete Strömungswiderstand federnd in Auslaßrichtung gegen seinen Ventilsitz vorgespannt sein, so daß bei Beaufschlagung des Ventilkörpers von der Außenseite her, nämlich beim Befüllen der CO₂-Druckflasche, den Strömungswiderstand aus seinem Ventilsitz gedrückt wird und dadurch den den Strömungswiderstand umgehenden Bypass freigibt. Zweckmäßigerweise ist der Ventilkörper in Form des Strömungswiderstandes mit einem kegelförmigen Ende ausgebildet, welches mit dem Ventilsitz in Eingriff tritt.

Besonders bevorzugt ist eine Ausführungsform der Erfindung, bei welcher der Strömungswiderstand in einem mit dem eigentlichen Auslaßventil verbindbaren Ansatzstück vorgesehen ist. Zum Beispiel kann dieses Ansatzstück an einem Ende mit einem Außengewinde nach Art einer Schraube versehen sein und wird dann anstelle einer Abschlußschraube in das untere Ende eines solchen Auslaßventils eingeschraubt, wobei eine solche herkömmliche Abschlußschraube im Regelfall in das untere Ende einer Durchlaßöffnung des Auslaßventils eingeschraubt ist und als Abstützung für eine in diesem Durchlaß bzw. Strömungsdurchgang angeordnete Ventilfeder dient, die das Betätigungsventil des Auslaßventils in Ausströmrichtung vorspannt. Es versteht sich, daß eine solche Abschluß- bzw. Abstützschraube für einen im wesentlichen ungehinderten Durchtritt von CO₂ durchbohrt ist und ebenso kann auch das Ansatzstück durchbohrt sein und in dieser Durchgangsbohrung den erwähnten Strömungswiderstand aufweisen.

Dabei kann es jedoch notwendig sein, gegebenenfalls vom Inneren der Druckflasche eine getrennte Verbindung zu einer Berstscheibe herzustellen, bzw. den Strömungswiderstand erst jenseits einer Abzweigung zu der Berstscheibe in dem Auslaßventil vorzusehen.
Dabei ist es selbstverständlich zweckmäßig, wenn der Gesamtdurchmesser des Ansatzstückes kleiner ist als der Innendurchmesser des Gewindes der Druckflaschenöffnung, in welche das Auslaßventil eingeschraubt wird. Auf diese Art und Weise ist es sehr leicht möglich, herkömmliche Auslaßventile mit dem erfindungsgemäßen Zusatzbauteil auszurüsten, indem einfach die durchbohrte Abschlußschraube durch das erfindungsgemäße Ansatzstück ersetzt wird, das zum einen als Abschlußschraube fungiert und eine Abstützung für die in dem Auslaßventil ohnehin vorgesehene Ventilfeder bildet, gleichzeitig aber auch den Strömungswiderstand enthält, der einen Durchtritt von CO₂ in flüssiger Form im wesentlichen verhindert bzw. mengenmäßig so stark einschränkt, daß auf der Seite des Druckminderers praktisch immer gleichwertige Betriebsbedingungen herrschen, die ohne vermeidbare CO₂-Verluste zu einem gleichmäßigen Begasungsgrad des Sprudelwassers führen.

Die vorliegende Erfindung ist insoweit auch auf das von dem Auslaßventil getrennt zu vertreibende Ansatzstück gerichtet, welches mit einem Auslaßventil verbindbar ist und einen entsprechenden Strömungswiderstand enthält.

Weitere Vorteile. Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: ein Auslaßventil nach dem Stand der Technik,
- Figur 2: eine erste Ausführungsform eines erfindungsgemäß ergänzten Strömungsventils mit einem Strömungswiderstand und einem darin zusätzlich vorgesehen Rückschlagventil,
- Figur 3: eine weitere Ausführungsform mit einem als Ventilkörper ausgebildeten Strömungswiderstand,
- Figur 4: eine Ausführungsform ähnlich Figur 3, wobei jedoch der Ventilkörper zusätzlich eine bessere Führung aufweist und
- Figur 5: einen Schnitt entsprechend der Linie V-V in Figur 4, in welchem der Querschnitt des Führungsabschnittes des Ventilkörpers erkennbar ist.

Gemäß Figur 1 besteht das nach dem Stand der Technik bekannte Auslaßventil 100 aus einem Ventilkörper 1 mit einem Strömungsdurchgang 8 und einem Betätigungsventil 10. Das Betätigungsventil 10 seinerseits besteht aus dem Ventilteller 2, dem damit verbundenen Betätigungsnippel 3, dem Führungsabschnitt 4 des Ventilelementes, einer Ventilfeder 9 und einer Abstützschraube 7. Die Abstützschraube 7 ist durchbohrt und hat einen Strömungsdurchgang 11, der mit dem Hauptströmungsdurchgang 8 in Verbindung steht. Der Führungsabschnitt 4 hat entweder Spiel, Längsnuten oder Bohrungen, durch welche sichergestellt ist, daß der Strömungsdurchgang 8 bei Eindrücken des Betätigungsnippels 3 und dem Lösen des Ventiltellers 2 von seinem Sitz ein entsprechender Austrittsquerschnitt für das CO₂-Gas freigegeben wird. Der untere Abschnitt des Ventilkörpers 1 weist ein Außengewinde 6 auf, welches in ein passendes Innengewinde der Öffnung einer Druckgasflasche eingeschraubt wird. Dabei tritt ein O-Ring 5 mit einem die Öffnung der Druckgasflasche umgebenden, ebenen Rand in Eingriff und wird durch einen am Ventilkörper 1 oberhalb des O-Ringes 5 vorgesehenen Bund 12 fest und dicht auf diesen Öffnungsrand aufgepreßt. Ein Überdruckventil 20 steht zusätzlich mit dem Strömungsdurchgang 8 in Verbindung und gibt bei entsprechendem Überdruck eine Entlüftungsöffnung frei, um ein Explodieren der Druckgasflasche zu verhindern.

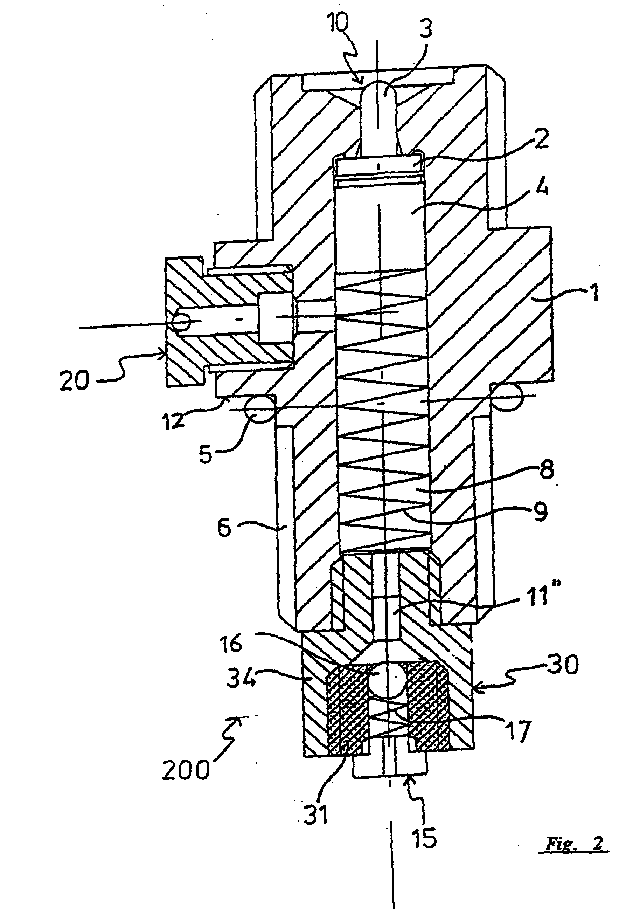

In Figur 2 erkennt man eine erste Ausführungsform eines erfindungsgemäß veränderten Auslaßventils 200, wobei die Veränderung im wesentlichen darin besteht, daß die Abstütz- bzw. Abschlußschraube 7 am unteren Ende des Ventils durch ein Ansatzstück 30 ersetzt worden ist, welches einen Ansatzkorpus 34 aufweist, in dem ein poröser Sinterkörper 31 aufgenommen ist, der eine zentrale Bohrung mit einem darin vorgesehenen Rückschlagventil hat. Das Rückschlagventil 15, 16, 17 ist mit Hilfe einer Feder 17 in Ausströmrichtung vorgespannt und steht mit einem entsprechenden Ventilsitz innerhalb des Sinterkörpers 31 in Verbindung. Bei Druckbeaufschlagung von der Seite der Druckgasflasche her ist dieses Rückschlagventil 15, 16, 17 geschlossen, so daß CO₂ nur durch den porösen Sinterkörper 31 in den Strömungsdurchgang 8 hindurchtreten kann, wenn das Ventilelement 10 betätigt wird.

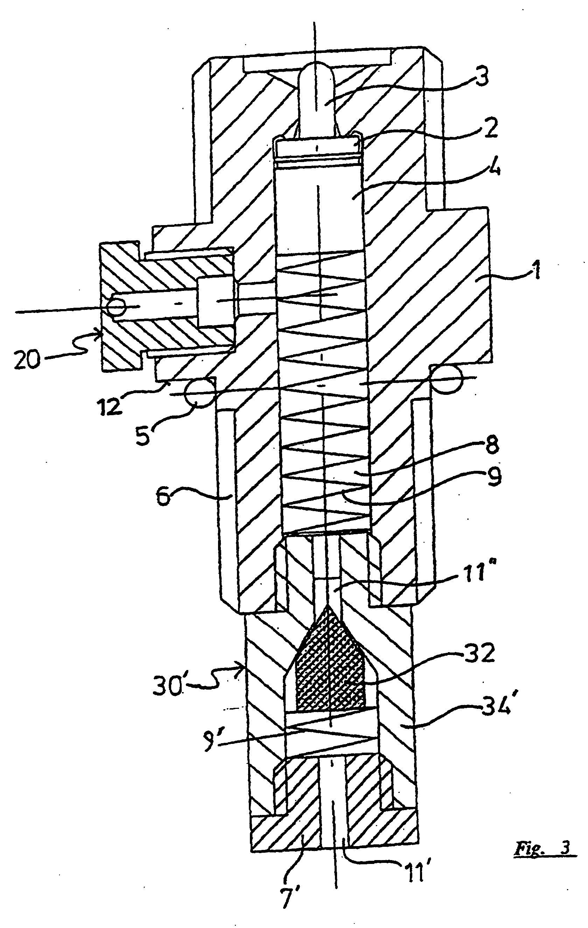

In der Ausführungsform gemäß Figur 3 ist ebenfalls die Abschlußschraube 7 des Ventils 100 durch ein Ansatzstück 30' ersetzt. In diesem Fall wird durch den Korpus 34' des Ansatzstückes 30' und einen darin aufgenommenen, im oberen Teil kegelförmig ausgebildeten Sinterkörper 32 ein teilweise durchlässiges Rückschlagventil gebildet. Der Sinterkörper 32 wird durch eine Feder in Ausströmrichtung gegen den in dem Ansatzkorpus 34' ausgebildeten, kegelförmigen Ventilsitz vorgespannt, wobei sich die Feder an einer Abstützschraube 7' abstützt, die eine Durchgangsbohrung 11' aufweist, ähnlich wie die Abstützschraube 7 des Ventils nach dem Stand der Technik. In Ausströmrichtung muß das CO₂ durch den Sinterkörper 32 hindurchtreten und kann dann über den Durchgang 11', 8 und das Ventilelement 10 in einen Druckminderer eintreten. In Einlaßrichtung sorgt dagegen der Druck des einströmenden CO₂-Gases oder des CO₂ in flüssiger Form dafür, daß der poröse Sinterkörper 32 aus seinem Ventilsitz weggedrückt wird, so daß das CO₂ an dem Sinterkörper 32 vorbei in die Druckgasflasche einströmen kann.

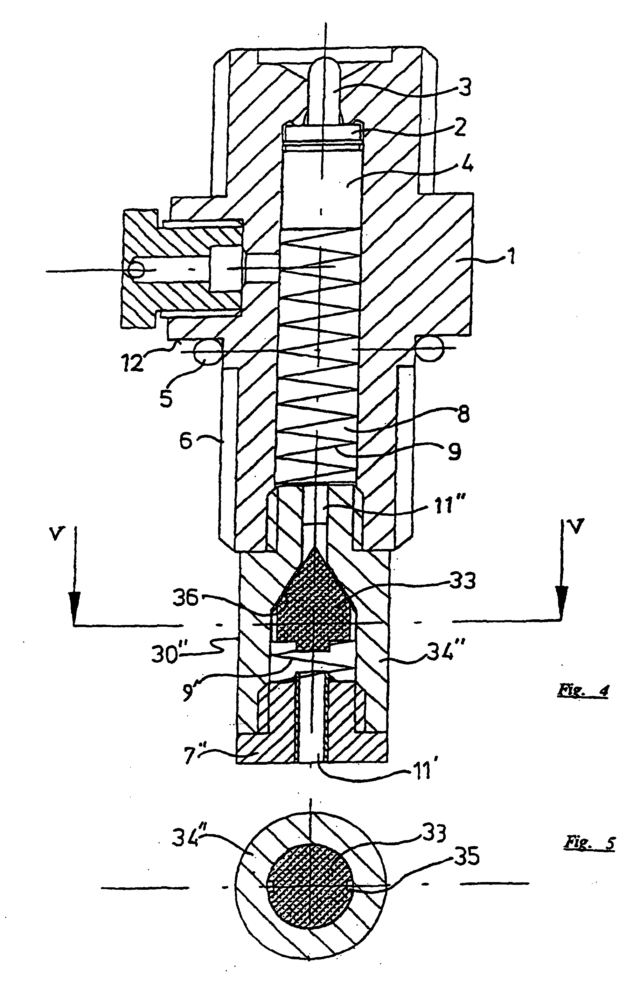

Die Ausführungsform nach Figur 4 ist der in Figur 3 sehr ähnlich, wobei in diesem Fall jedoch der untere Abschnitt des porösen Sinterkörpers 33 im wesentlichen zylindrisch mit einem Außendurchmesser ausgebildet ist, der dem Innendurchmesser des Korpus 34" in seinem unteren Teil im wesentlichen entspricht, so daß der poröse Sinterkörper 33 hierdurch eine gute Führung aufweist und nicht verkippen kann. Zum Hindurchlassen des CO₂-Gases bzw. des CO₂ in flüssiger Form beim Befüllen einer Druckgasflasche sind in dem zylindrischen Führungsabschnitt des Sinterkörpers 33 in Längsrichtung verlaufende Nuten 35 vorgesehen, so daß, wenn beim Befüllen der Druckflasche der Sinterkörper 33 gegen die Feder 9' zurückgedrückt wird und dadurch ein Durchgang zwischen dem kegelförmigen Ventilsitz und dem kegelförmigen Abschnitt des Sinterkörpers freigegeben wird, das CO₂ auch durch die in Längsrichtung verlaufenden Nuten 35 an dem zylindrischen Abschnitt vorbei in die Druckgasflasche einströmen kann.

Der Querschnitt dieses zylindrischen Abschnittes mit den beiden Nuten 35 ist in Figur 5 deutlich zu erkennen.

## Patentansprüche

1. Auslaßventil für CO₂-Druckflaschen, mit einem Strömungsdurchgang (8) für CO₂-Gas, einem von außen betätigbaren Ventilelement (10), welches verschiedene Positionen einnehmen kann und in mindestens einer dieser Positionen den Strömungsdurchgang (8) verschließt und in mindestens einer anderen seiner Positionen den Strömungsdurchgang (8) freigibt, und mit Verbindungselementen (6, 5) für das feste und dichte Verbinden des Auslaßventils (100) mit einer CO₂-Druckflasche, wobei in dem Strömungsdurchgang (8) ein von der durch das Ventilelement (10) freigebbaren Ventilöffnung unabhängiger Strömungswiderstand (31, 32, 33) vorgesehen ist, **dadurch gekennzeichnet, daß** der Strömungswiderstand (31, 32, 33) derart ausgebildet ist, daß er bei einer Temperatur von 20°C und einer CO₂-Gas-Strömungsrate von 0,5 g/s einen Druckabfall von mindestens 1 bar, vorzugsweise von mehr als 3 bar hervorruft.

2. Auslaßventil nach Anspruch 1, **dadurch gekennzeichnet, daß** der Druckabfall bei den angegebenen Bedingungen mehr als 5 bar, vorzugsweise mehr als 10 bar beträgt.

3. Auslaßventil nach Anspruch 1 oder 2, **dadurch gekennzeichnet, daß** der Druckabfall höchstens 50 bar, vorzugsweise weniger als 40 bar und besonders bevorzugt weniger als 30 bar beträgt.

4. Auslaßventil nach einem der Ansprüche 1 bis 3, **dadurch gekennzeichnet, daß** der unter den in Anspruch 2 angegebenen Bedingungen hervorgerufene Druckabfall am Strömungswiderstand zwischen 12 und 15 bar beträgt.

5. Auslaßventil nach einem der Ansprüche 1 bis 4, **dadurch gekennzeichnet, daß** es zusätzlich ein von dem zu betätigenden Ventilelement (10) unabhängiges Rückschlagventil (15, 16, 17) aufweist, welches in Einlaßrichtung einen den Strömungswiderstand (31) umgehenden Bypass (35) freigibt und in Ausströmrichtung schließt

6. Auslaßventil nach Anspruch 5, **dadurch gekennzeichnet, daß** das Rückschlagventil in Schließrichtung federnd vorgespannt ist.

7. Auslaßventil nach einem der Ansprüche 1 bis 6, **dadurch gekennzeichnet, daß** der Strömungswiderstand ein Sinterkörper (31, 32, 33) oder eine druckfeste Membran ist.

8. Auslaßventil nach Anspruch 7, **dadurch gekennzeichnet, daß** der Strömungswiderstand mindestens teilweise aus Kunststoff oder Keramik besteht.

9. Auslaßventil nach Anspruch 7, **dadurch gekennzeichnet, daß** der Strömungswiderstand aus Metall besteht.

10. Auslaßventil nach einem der Ansprüche 7 bis 9, bei welchem der Strömungswiderstand aus einem Sinterkörper besteht, **dadurch gekennzeichnet, daß** der Sinterkörper eine durchschnittliche Porengröße im Bereich von 1 bis 10 ìm hat.

11. Auslaßventil nach Anspruch 10, **dadurch gekennzeichnet, daß** er eine Porosität zwischen 10 und 80%, vorzugsweise zwischen 10 und 40% hat.

12. Auslaßventil nach einem der Ansprüche 1 bis 11, **dadurch gekennzeichnet, daß** der Strömungswiderstand (32, 33) als in einem Ventilsitz (36) beweglich aufgenommener Ventilkörper ausgebildet ist.

13. Auslaßventil nach Anspruch 12, **dadurch gekennzeichnet, daß** der Strömungswiderstand (32, 33) in Ausströmrichtung des CO₂ vorgespannt ist.

14. Auslaßventil nach einem der Ansprüche 12 oder 13, **dadurch gekennzeichnet, daß** der Strömungswiderstand (32, 33) eine im wesentlichen kegelförmige Oberfläche für die Aufnahme in einem Ventilsitz (36) aufweist.

15. Auslaßventil nach einem der Ansprüche 1 bis 14, wobei das Ventilelement (10) auf einer der CO₂-Druckflasche abgewandten Seite des Auslaßventils angeordnet ist, **dadurch gekennzeichnet, daß** der Strömungswiderstand auf der der CO₂-Druckflasche zugewandten Seite des Auslaßventils angeordnet ist.

16. Ansatzstück für ein Auslaßventil für CO₂-Druckflaschen, **dadurch gekennzeichnet, daß** das Ansatzstück (30, 30', 30") fest und dicht mit dem Auslaßventil verbindbar ist und einen Strömungswiderstand (31, 32, 33) nach einem der Ansprüche 1 bis 15 aufweist.

17. Ansatzstück für ein Auslaßventil nach Anspruch 16, wobei das Auslaßventil an seinem der CO₂-Druckflasche zugewandten Ende ein Innengewinde zur Aufnahme einer Stützfeder (9) für das Ventilelement (10) aufweist, **dadurch gekennzeichnet, daß** der Strömungswiderstand (31, 32, 33) in einem Ansatzstück mit Außengewinde angeordnet ist, welches dem Innengewinde am inneren Ende des Auslaßventils (100) entspricht.

18. Ansatzstück nach Anspruch 16 oder 17, **dadurch gekennzeichnet, daß** der maximale Außendurchmesser des Ansatzstückes (34, 34', 34") kleiner ist als der Innendurchmesser eines Aufnahmegewindes der Druckflasche für die Verbindung mit dem Auslaßventil.

19. Ansalzstück nach einem der Ansprüche 16 bis 18, **dadurch gekennzeichnet, daß** das Ansatzstück (34, 34', 34") auf seiner dem Auslaßventil abgewandten Seite ein Innengewinde hat, dessen Durchmesser und Steigung dem Innengewinde am inneren Ende des Auslaßventilkörpers entspricht.

## Claims

1. A discharge valve for CO₂ pressure cylinders, comprising a flow passage (8) for CO₂ gas, a valve element (10) which is actuable from the exterior and which can assume various positions and which in at least one of said positions closes the flow passage (8) and in at least one other of its positions opens the flow passage (8), and connecting elements (6, 5) for fixedly and sealingly connecting the discharge valve (100) to a CO₂ pressure cylinder, wherein provided in the flow passage (8) is a flow resistance (31, 32, 33) which is independent of the valve opening which is openable by the valve element (10), **characterised in that** the flow resistance (31, 32, 33) is such that at a temperature of 20°C and a CO₂ gas flow rate of 0.5 g/s it causes a pressure drop of at least 1 bar and preferably of more than 3 bars.

2. A discharge valve according to claim 1 **characterised in that** the pressure drop is more than 5 bars and preferably more than 10 bars under the specified conditions.

3. A discharge valve according to claim 1 or claim 2 **characterised in that** the pressure drop is at most 50 bars, preferably less than 40 bars and particularly preferably less than 30 bars.

4. A discharge valve according to one of claims 1 to 3 **characterised in that** the pressure drop caused under the conditions recited in claim 2 at the flow resistance is between 12 and 15 bars.

5. A discharge valve according to one of claims 1 to 4 **characterised in that** it additionally has a check valve (15, 16, 17) which is independent of the valve element (10) to be actuated and which in the intake direction opens a by-pass (35) by-passing the flow resistance (31) and closes in the discharge flow direction.

6. A discharge valve according to claim 5 **characterised in that** the check valve is resiliently biased in the closing direction.

7. A discharge valve according to one of claims 1 to 6 **characterised in that** the flow resistance is a sintered body (31, 32, 33) or a pressure-resistant diaphragm.

8. A discharge valve according to claim 7 **characterised in that** the flow resistance at least partially comprises plastic material or ceramic.

9. A discharge valve according to claim 7 **characterised in that** the flow resistance comprises metal.

10. A discharge valve according to one of claims 7 to 9 in which the flow resistance comprises a sintered body **characterised in that** the sintered body has an average pore size in the range of between 1 and 10 µm.

11. A discharge valve according to claim 10 **characterised in that** it is of a porosity of between 10 and 80%, preferably between 10 and 40%.

12. A discharge valve according to one of claims 1 to 11 **characterised in that** the flow resistance (32, 33) is in the form of a valve body movably accommodated in a valve seat (36).

13. A discharge valve according to claim 12 **characterised in that** the flow resistance (32, 33) is biased in the CO₂ discharge flow direction.

14. A discharge valve according to one of claims 12 and 13 **characterised in that** the flow resistance (32, 33) has a substantially tapered surface for reception in a valve seat (36).

15. A discharge valve according to one of claims 1 to 14 wherein the valve element (10) is arranged on a side of the discharge valve which is remote from the CO₂ pressure cylinder, **characterised in that** the flow resistance is arranged on the side of the discharge valve, which is towards the CO₂ pressure cylinder.

16. An attachment portion for a discharge valve for CO₂ pressure cylinders, **characterised in that** the attachment portion (30, 30', 30") can be fixedly and sealingly connected to the discharge valve and has a flow resistance (31, 32, 33) according to one of claims 1 to 15.

17. An attachment portion for a discharge valve according to claim 16 wherein at its end towards the CO₂ pressure cylinder the discharge valve has a female screwthread for receiving a support spring (9) for the valve element (10), **characterised in that** the flow resistance (31, 32, 33) is arranged in an attachment portion with a male screwthread which corresponds to the female screwthread at the inner end of the discharge valve (100).

18. An attachment portion according to claim 16 or claim 17 **characterised in that** the maximum outside diameter of the attachment portion (34, 34', 34") is smaller than the inside diameter of a receiving screwthread of the pressure cylinder for connection to the discharge valve.

19. An attachment portion according to one of claims 16 to 18 **characterised in that** on its side remote from the discharge valve the attachment portion (34, 34', 34") has a female screwthread whose diameter and pitch correspond to the female screwthread at the inner end of the discharge valve body.

## Revendications

1. Clapet de sortie pour bouteilles de CO₂ sous pression, comportant un passage d'écoulement (8) pour le gaz CO₂, un élément de clapet (10) actionnable de l'extérieur qui peut occuper différentes positions et ferme le passage d'écoulement (8) dans au moins l'une de ces positions et libère le passage d'écoulement (8) dans au moins l'une des autres positions, et des éléments de liaison (6, 5) pour la liaison fixe et étanche du clapet de sortie (100) à une bouteille de CO₂ sous pression, une résistance à l'écoulement (31, 32, 33) indépendante de l'ouverture de clapet libérable par l'élément de clapet (10) étant prévue dans le passage d'écoulement (8), **caractérisé en ce que** la résistance à l'écoulement (31, 32, 33) est conformée de façon à provoquer, à une température de 20°C et une vitesse d'écoulement de gaz CO₂ de 0,5 g/s, une chute de pression d'au moins 1 bar, avantageusement de plus de 3 bar.

2. Clapet de sortie selon la revendication 1, **caractérisé en ce que** la chute de pression dans les conditions indiquées est supérieure à 5 bar, avantageusement supérieur à 10 bar.

3. Clapet de sortie selon la revendication 1 ou 2, **caractérisé en ce que** la chute de pression est de 50 bar maximum, avantageusement inférieure à 40 bar et de façon particulièrement préférée inférieure à 30 bar.

4. Clapet de sortie selon l'une des revendications 1 à 3, **caractérisé en ce que** la chute de pression au niveau de la résistance d'écoulement, provoquée dans les conditions indiquées dans la revendication 2, est comprise entre 12 et 15 bar.

5. Clapet de sortie selon l'une des revendications 1 à 4, **caractérisé en ce qu'**il comporte en plus un clapet anti-retour (15, 16, 17) qui est indépendant de l'élément de clapet (10) à actionner et qui libère une dérivation (35) contournant la résistance à l'écoulement (31) dans le sens d'admission et la libère dans le sens de sortie.

6. Clapet de sortie selon la revendication 5, **caractérisé en ce que** le clapet anti-retour est précontraint élastiquement dans le sens de fermeture.

7. Clapet de sortie selon l'une des revendications 1 à 6, **caractérisé en ce que** la résistance à l'écoulement est un corps fritté (31, 32, 33) ou une membrane résistant à la pression.

8. Clapet de sortie selon la revendication 7, **caractérisé en ce que** la résistance à l'écoulement est au moins partiellement en matière plastique ou en céramique.

9. Clapet de sortie selon la revendication 7, **caractérisé en ce que** la résistance à l'écoulement est en métal.

10. Clapet de sortie selon l'une des revendications 7 à 9, dans lequel la résistance à l'écoulement est constituée par un corps fritté, **caractérisé en ce que** le corps fritté a une dimension de pore moyenne dans la gamme allant 1 à 10 nm.

11. Clapet de sortie selon la revendication 10, **caractérisé en ce qu'**il a une porosité comprise entre 10 et 80 %, avantageusement entre 10 et 40 %.

12. Clapet de sortie selon l'une des revendications 1 à 11, **caractérisé en ce que** la résistance à l'écoulement (32, 33) est conformée en corps de soupape mobile reçu dans un siège de clapet (36).

13. Clapet de sortie selon la revendication 12, **caractérisé en ce que** la résistance à l'écoulement (32, 33) est précontrainte dans le sens de la sortie du CO₂.

14. Clapet de sortie selon l'une des revendications 12 ou 13, **caractérisé en ce que** la résistance à l'écoulement (32, 33) présente une surface sensiblement conique en vue de la réception dans un siège de clapet (36).

15. Clapet de sortie selon l'une des revendications 1 à 14, dans lequel l'élément de clapet (10) est agencé du côté du clapet de sortie qui est opposé à la bouteille de CO₂ sous pression, **caractérisé en ce que** la résistance à l'écoulement est agencée du côté du clapet de sortie qui est dirigé vers la bouteille de CO₂ sous pression.

16. Embout pour un clapet de sortie pour bouteilles de CO₂ sous pression, **caractérisé en ce que** l'embout (30, 30', 30") peut être relié fixe et étanche au clapet de sortie et comporte une résistance à l'écoulement (31, 32, 33) selon l'une des revendications 1 à 15.

17. Embout pour un clapet de sortie selon la revendication 16, dans lequel le clapet de sortie comporte à son extrémité qui est dirigée vers la bouteille de CO₂ sous pression un taraudage destiné à recevoir un ressort de soutien (9) destiné à l'élément de clapet (10), **caractérisé en ce que** la résistance à l'écoulement (31, 32, 33) est agencée dans un embout présentant un filetage extérieur qui correspond au taraudage à l'extrémité intérieure du clapet de sortie (100).

18. Embout selon la revendication 16 ou 17, **caractérisé en ce que** le diamètre extérieur maximum de l'embout (34, 34', 34") est inférieur au diamètre intérieur d'un filetage de réception de la bouteille sous pression en vue de la liaison avec le clapet de sortie.

19. Embout selon l'une des revendications 16 à 18, **caractérisé en ce que** l'embout (34, 34', 34") comporte du côté opposé au clapet de sortie un taraudage dont le diamètre et le pas correspondent à ceux du taraudage à l'extrémité intérieure du corps de clapet de sortie.
